# EUROPÄISCHE PATENTSCHRIFT

(11) **EP 0 451 556 B1**
(45) Veröffentlichungstag und Bekanntmachung des Hinweises auf die Patenterteilung: **10.01.1996**
(21) Anmeldenummer: 91104273.7
(22) Anmeldetag: 20.03.1991
(51) Int. Cl.: C08K 5/00

(54) **Stabilisierte Polyaryletherketon-Formmassen**
Stabilised polyaryletherketone - moulding compounds
Masses à mouler de poly(aryléthercétones) stabilisées

(30) Priorität: 30.03.1990 DE 4010188
(43) Veröffentlichungstag der Anmeldung: 16.10.1991
(73) Patentinhaber: BASF Aktiengesellschaft, D-67063 Ludwigshafen (DE)
(72) Erfinder: Koch, Jürgen, Dr., W-6708 Neuhofen (DE); Heinz, Gerhard, Dr., W-6719 Weisenheim (DE)

(56) Entgegenhaltungen:
- EP-A- 0 206 509
- US-A- 4 897 307
- WORLD PATENTS INDEX LATEST Week 8738, Derwent Publications Ltd., London, GB; AN 87-266715

## Beschreibung

Die vorliegende Erfindung betrifft stabilisierte Polyaryletherketon-Formmassen, enthaltend als wesentliche Komponenten
A) 50 bis 99,99 Gew.-% eines durch elektrophile Polykondensation hergestellten Polyaryletherketons, das zu mindestens 50 mol-% aus Einheiten der allgemeinen Formel I' 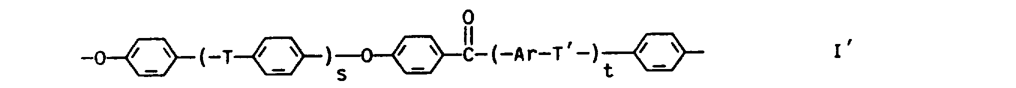 oder deren kernsubstituierten C₁- bis C₈-Alkyl-, C₆- bis C₂₀-Aryl- oder Halogenderivaten besteht, wobei s, t jeweils den Wert 0, 1, 2 oder 3 annehmen können, T, T' -O- oder -CO- bedeuten und Ar für meta-Phenylen, para-Phenylen oder zwei aromatische Ringe, die in meta- oder para-Stellung durch eine chemische Bindung miteinander verknüpft sind, steht,
B) 0,01 bis 4 Gew.-% mindestens einer organischen Verbindung, die eine Basenkonstante pK_{b} zwischen 2 und 12 aufweist und einen Siedepunkt größer als 300°C hat,
C) 0 bis 50 Gew.-% eines weiteren, von A) verschiedenen Thermoplasten,
D) 0 bis 45 Gew.-% faser- oder teilchenförmige Füllstoffe oder deren Mischungen.

Weiterhin betrifft die Erfindung die Verwendung derartiger stabilisierter Polyaryletherketon-Formmassen zur Herstellung von Fasern, Folien und Formkörpern sowie Fasern, Folien und Formkörper, die diese Polyaryletherketon-Formmassen als wesentliche Komponenten enthalten.

Polyaryletherketon-Formmassen sind hochwertige Thermoplaste, die sich durch besonders hohe Temperaturbeständigkeit, hohe Zähigkeit, sehr gute mechanische Eigenschaften und Resistenz gegenüber den üblichen Lösungsmitteln auszeichnen.

Polyaryletherketone können nach zwei unterschiedlichen, an sich bekannten, Verfahren hergestellt werden. Beim sogenannten nucleophilen Polykondensationsverfahren wird die Sauerstoffbrücke gebildet, indem z.B. aromatische Dihydroxyverbindungen mit Difluorketonen unter Basenkatalyse umgesetzt werden. Ein solches Verfahren ist beispielsweise in der EP-A-1879 beschrieben.

Eine zweite Möglichkeit zur Herstellung von Polyaryletherketonen ist die elektrophile (Friedel-Crafts-)Polykondensation. Hierbei werden zur Bildung der Carbonylbrücke entweder aromatische Dicarbonsäuredichloride oder Phosgen mit Aromaten, welche zwei - durch elektrophile Substitution austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Friedel-Crafts-Reaktionen werden üblicherweise in Gegenwart einer Lewis-Säure als Katalysator in Lösungen durchgeführt, wie es z.B. in der us-A-3 441 538, US-A-3 442 857, US-A-3 953 400, DE-A-3 241 444, DE-A-34 16 445 und der DE-A-34 16 446 beschrieben ist. Die Reaktion in Gegenwart einer Lewis-Säure und einer Lewis-Base ist ebenfalls möglich und beispielsweise in der EP-A-124 276 beschrieben.

Die durch elektrophile Polykondensation hergestellten Polyetherketone können durch Extraktion mit einem geeigneten Lösungsmittel weitgehend von den vorhandenen Säuren gereinigt werden, Spuren von Säure bleiben jedoch im Polymeren zurück.

Bei der thermoplastischen Verarbeitung von Polyaryletherketon-Formmassen werden in der Schmelze Temperaturen von 400°C, kurzzeitig sogar Temperaturen um 450°C erreicht. Bei diesen sehr hohen Temperaturen können schon geringe Spuren von Säure das Polymer schädigen. Deshalb wurde in der DE-A 24 19 044 vorgeschlagen, dem Polymer amphotere Metalloxide zuzusetzen. Diese können aufgrund ihrer basischen Eigenschaften die Säurespuren binden oder neutralisieren. Für denselben Zweck wird in der EP-A 197 727 die Verwendung von Molekularsieben vorgeschlagen. Diese Stabilisatoren haben jedoch beide den Nachteil, daß sie sich im Polymer nicht homogen verteilen und auch zu größeren Teilchen agglomerieren können. Bei der Herstellung von sehr feinen Fasern oder Folien können diese Zusätze daher zu großen Verarbeitungsproblemen führen. Als nicht schmelzbare Substanzen können sie zusätzlich das Kristallisationsverhalten von teilkristallinen Polymeren verändern. Weiterhin neigen die genannten Metalloxide und Molekularsiebe dazu, langsam Wasser zu absorbieren, das bei den für Polymere üblichen Trocknungstemperaturen nicht freigesetzt wird. Bei den wesentlich höheren Verarbeitungstemperaturen kann das Wasser dann abgespalten werden und zum Aufschäumen des Polymeren führen.

Der Erfindung lag daher die Aufgabe zugrunde, den geschilderten Mängeln abzuhelfen.

Demgemäß wurden die eingangs definierten stabilisierten Polyaryletherketon-Formmassen gefunden. Weiterhin wurde ihre Verwendung zur Herstellung von Fasern, Folien und Formkörpern gefunden.

Die als Komponente A) eingesetzten Polyaryletherketone bestehen zu mindestens 50 mol-% aus Einheiten der allgemeinen Formel I' 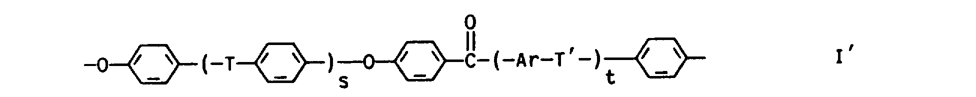 wobei s und t jeweils den Wert 0, 1, 2 oder 3 annehmen können, T und T' ein Sauerstoffatom oder eine Carbonylgruppe bedeuten und Ar für meta- Phenylen, para-Phenylen oder zwei aromatische Ringe, die in meta- oder para-Stellung durch eine chemische Bindung miteinander verknüpft sind, insbesondere für 4,4'-Biphenylen, steht. Grundsätzlich können die aromatischen Einheiten der Polyaryletherketone I' mit C₁- bis C₈-Alkyl-, C₆- bis C₂₀-Arylresten oder Halogenatomen substituiert sein. Im allgemeinen werden jedoch die unsubstituierten Derivate bevorzugt.

Insbesondere sind Einheiten der allgemeinen Formel I 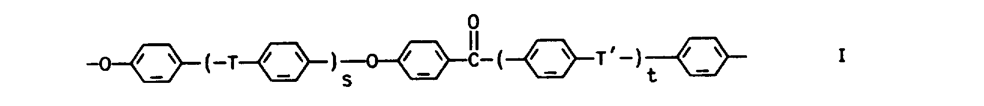 zu nennen. Beispiele für besonders bevorzugte Einheiten der allgemeinen Formel I sind: 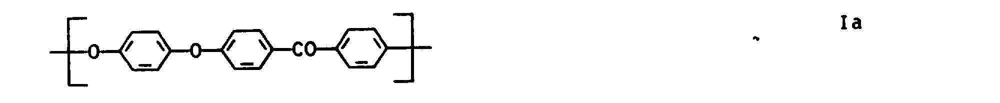 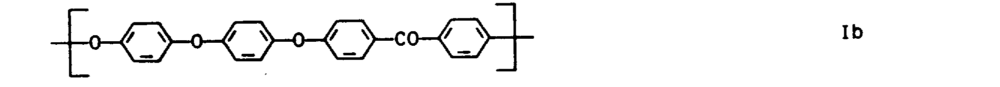 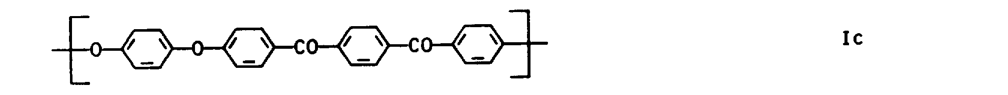 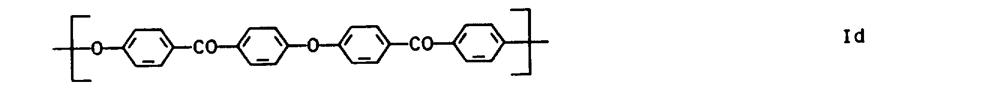 und insbesondere 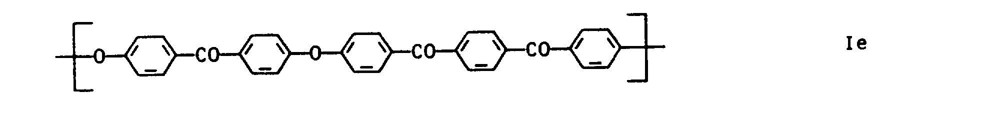 über die Substituenten T und T' sowie die Parameter s und t lassen sich die vorstehenden Beispiele wie folgt beschreiben:

| | s | t | T | Tʹ |
|---|---|---|---|---|
| Ia | 0 | 0 | - | - |
| Ib | 1 | 0 | 0 | - |
| Ic | 0 | 1 | - | CO |
| Id | 1 | 0 | CO | - |
| Ie | 1 | 1 | CO | CO |

Die Komponente A) wird in Mengen von 50 bis 99,99 Gew.-%, bezogen auf das Gesamtgewicht der Formmassen, eingesetzt, bevorzugt 60 bis 99,99 Gew.-%, insbesondere 70 bis 99,99 Gew.-%.

Die Herstellung der Polyaryletherketone erfolgt durch elektrophile Polykondensation; es wird bei den üblichen, dem Fachmann bekannten, Verfahrensbedingungen gearbeitet. Verwendet man als Ausgangsstoffe aromatische Dicarbonsäuredichloride und Aromaten, die zwei substituierbare Wasserstoffatome aufweisen, so sind beispielsweise Terephthalsäuredichlorid oder 4,4'-Diphenyldicarbonsäuredichlorid sowie Diphenylether, 1,4-Diphenoxybenzol oder 4,4'-Diphenoxybenzophenon zu nennen. Als selbstkondensierbares Monomer ist 4-Phenoxybenzoylchlorid geeignet.

Die als Stabilisatoren eingesetzte Komponente B) weist eine Basenkonstante pK_{b} zwischen 2 und 12, bevorzugt zwischen 3 und 11 auf, sowie einen Siedepunkt größer als 300°C, vorzugsweise zwischen 320 und 500°C. Beispiele geeigneter Verbindungen sind 2,3-Bipyridin, 4-Benzoylpyridin, 2,6-Diphenylpyridin, 2,6-Bis(benzoylphenyl)pyridin, 2,6-Bis(4-benzoylphenoxy)pyridin, 2,2',6,2"-Terpyridin, Phenazin, 3,4-Benzochinolin, 7,8-Benzochinolin, 2-Phenylchinolin, 2-Phenylindol, 1-Methyl-2-phenylindol, 1,2-Diphenylindol, 9-Phenylcarbazol, Dibenzothiophen und Thioxanthon, wobei 4-Benzoylpyridin, 9-Phenylcarbazol und 2-Phenylindol bevorzugt sind. Mischungen dieser Verbindungen können ebenfalls eingesetzt werden.

Die Komponente 8) wird in Mengen von 0,01 bis 4 Gew.-%, bevorzugt von 0,1 bis 1 Gew.-%, eingesetzt.

Zusätzlich können weitere, von der Komponente A) verschiedene, Thermoplasten C) eingemischt werden. Hierbei eignen sich besonders Polyarylethersulfone oder deren Copolymere, Polyetherimide, Polyamidimide, Polyimide, aromatische Polyester, Polyphenylensulfide, Fluor-Polymere und aliphatische oder aromatische Polyamide.

Entsprechende Produkte sind dem Fachmann bekannt und kommerziell erhältlich.

Diese Polymeren können in Mengen von 0 bis 50 Gew.-%, bevorzugt von 5 bis 30 Gew.-% zugesetzt werden.

Weiterhin können die erfindungsgemäßen stabilisierten Polyaryletherketon-Formmassen als Komponente D) faser- oder teilchenförmige Füllstoffe, sowie deren Mischungen, in Mengen von 0 bis 45 Gew.-%, insbesondere von 5 bis 40 Gew.-%, enthalten. Als verstärkend wirkende Füllstoffe seien beispielsweise Asbest oder Fasern aus Aramid, Glas oder Kohlenstoff genannt, die sowohl als Kurzfasern als auch als Endlosfasern eingesetzt werden können. Weiterhin können Pigmente wie Titandioxid, Cadmium- oder Zinksulfid, Bariumsulfat und Ruß zugemischt werden. Als weitere Zusatz- und Hilfsstoffe kommen beispielsweise Flammschutzmittel, weitere von B) verschiedene Stabilisatoren und übliche Verarbeitungshilfsmittel in Betracht.

Zur Herstellung der erfindungsgemäßen stabilisierten Polyaryletherketon-Formmassen können die Komponenten A) und B) sowie gegebenenfalls C) und D) in einer Mischvorrichtung, vorzugsweise in einem Extruder, bei einer Gehäusetemperatur von 350 bis 450°C, vorzugsweise von 390 bis 420°C, umgesetzt werden. Die Komponente B) ist bei den üblichen Mischungsbedingungen und üblichen Verweilzeiten stabil. Vorzugsweise wird zu einem Strang extrudiert und granuliert.

Die erfindungsgemäßen stabilisierten Polyaryletherketon-Formmassen sind wesentlich schmelzestabiler als nicht stabilisierte Formmassen. Die beschriebenen Stabilisatoren sind in den Polymeren homogen löslich, neigen nicht zur Agglomeration und verursachen daher keine Verarbeitungsprobleme bei der Herstellung sehr feiner Fasern oder Folien. Die stabilisierten Polyaryletherketon-Formmassen eignen sich daher insbesondere zur Herstellung von Fasern, Folien und Formkörpern.

### Beispiele

### Herstellung des Polyaryletherketons

Nach der in der EP-A-124 276, Beispiel 13 beschriebenen Methode wurde ein Polyaryletherketon der Struktur Ie 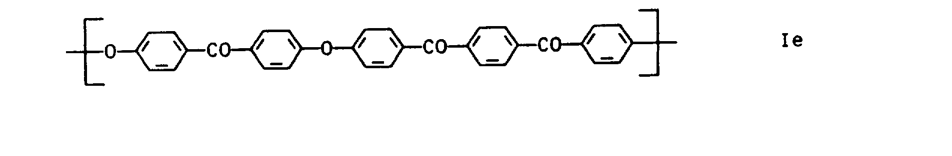 mit einer inhärenten Viskosität von 0,997 (gemessen an 0,5 g/100 ml in konzentrierter Schwefelsäure bei 25°C) hergestellt.

### Beispiele 1 bis 5

### Herstellung der stabilisierten Polyaryletherketon-Formmassen

Das Polyaryletherketon wurde mit je 0,5 Gew.-% Stabilisator versetzt, intensiv gemischt und auf einem Extruder bei einer Gehäusetemperatur von 400°C zu einem Strang extrudiert und granuliert.

### Vergleichsbeispiele V1 bis V3

V1: Das Polyaryletherketon wurde ohne Zusatz eines Stabilisators wie in den Beispielen 1 bis 5 extrudiert und granuliert
V2: Es wurde wie in den Beispielen 1 bis 5 gearbeitet, jedoch 0,5 Gew.-% eines kommerziell erhältlichen basischen Molekularsiebs eingearbeitet.
V3: Es wurde wie in den Beispielen 1 bis 5 gearbeitet, jedoch 0,5 Gew.-% eines basischen Aluminiumoxids eingemischt.

Aus den jeweiligen Granulaten wurde die Schmelzestabilität bestimmt. Die Messung erfolgte durch Bestimmung des Schmelzindex (MVI) nach DIN 53 735-MFI-B mit einem Gerät des Typs MP-D der Firma Göttfert bei 400°C mit 10 kg Auflagegewicht. Mit jeder Probe wurden drei Messungen mit 5, 30 und 60 Minuten Aufheizzeit durchgeführt. Die Ergebnisse der Schmelzindex-Messungen sind in der Tabelle zusammengestellt.

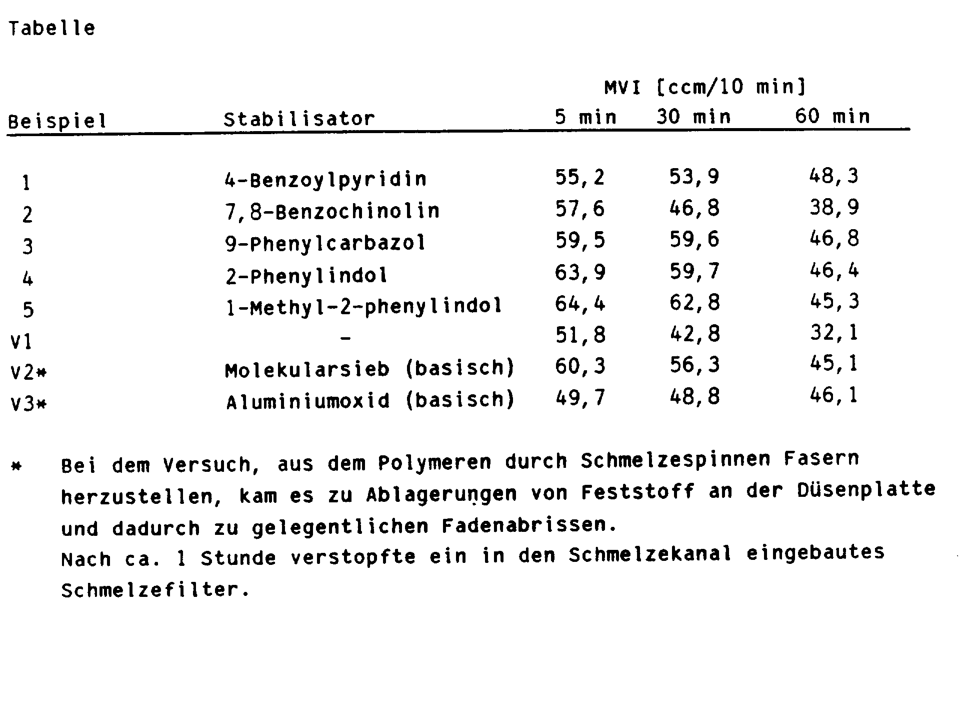

## Patentansprüche

1. Stabilisierte Polyaryletherketon-Formmassen, enthaltend
A) 50 bis 99,99 Gew.-% eines durch elektrophile Polykondensation hergestellten Polyaryletherketons, das zu mindestens 50 mol-% aus Einheiten der allgemeinen Formel I' 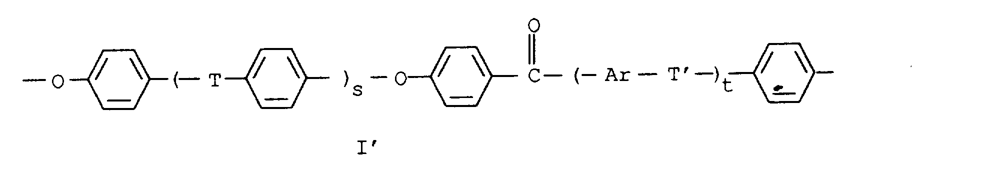 oder deren kernsubstituierten C₁- bis C₈-Alkyl-, C₆- bis C₂₀-Aryl- oder Halogenderivaten besteht, wobei s, t jeweils den Wert 0, 1, 2 oder 3 annehmen können, T, T', -O-oder -CO- bedeuten und Ar für meta-Phenylen, para-Phenylen oder zwei aromatische Ringe, die in meta- oder para-Stellung durch eine chemische Bindung miteinander verknüpft sind, steht,
B) 0,01 bis 4 Gew.-% mindestens einer organischen Verbindung, die eine Basenkonstante pK_{b} zwischen 2 und 12 aufweist und einen Siedepunkt größer als 300°C hat,
C) 0 bis 30 Gew.-% eines weiteren, von A) verschiedenen Thermoplasten,
D) 0 bis 45 Gew.-% faser- oder teilchenförmige Füllstoffe oder deren Mischungen.

2. Stabilisierte Polyaryletherketon-Formmassen nach Anspruch 1, dadurch gekennzeichnet, daß als Komponente A) ein Polyaryletherketon aus den Einheiten I 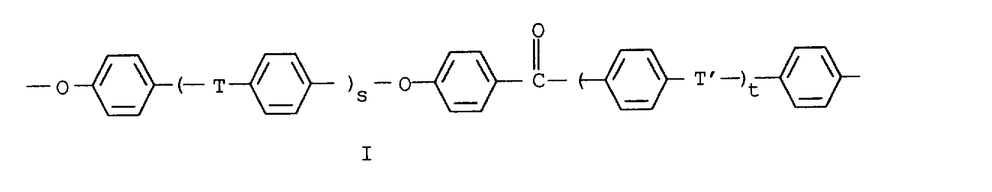 eingesetzt wird.

3. Stabilisierte Polyaryletherketon-Formmassen nach den Ansprüchen 1 bis 2, dadurch gekennzeichnet, daß sie die Komponente B) in einer Menge von 0,1 bis 1 Gew.-% enthalten.

4. Stabilisierte Polyaryletherketon-Formmassen nach den Ansprüchen 1 bis 3, dadurch gekennzeichnet, daß die Komponente B) ausgewählt ist aus der Gruppe 2,3-Bipyridin, 4-Benzoylpyridin, 2,6-Diphenylpyridin, 2,6-Bis(benzoylphenyl)pyridin, 2,6-Bis(4-benzoylphenoxy)pyridin, 2,2',6,2"-Terpyridin, Phenazin, 3,4-Benzochinolin, 7,8-Benzochinolin, 2-Phenylchinolin, 2-Phenylindol, 1-Methyl-2-phenylindol, 1,2-Diphenylindol, 9-Phenylcarbazol, Dibenzothiophen und Thioxanthon oder deren Mischungen.

5. Stabilisierte Polyaryletherketon-Formmassen nach den Ansprüchen 1 bis 4, dadurch gekennzeichnet, daß als Komponente A) ein Polyaryletherketon aus den Einheiten Ie 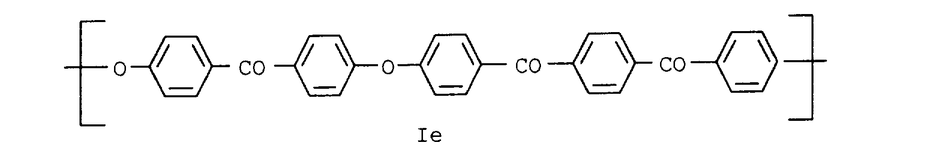 eingesetzt wird.

6. Verwendung von stabilisierten Polyaryletherketon-Formmassen gemäß den Ansprüchen 1 bis 5 zur Herstellung von Fasern, Folien und Formkörpern.

7. Verwendung organischer Verbindungen, die eine Basenkonstante pK_{b} zwischen 2 und 12 aufweisen und einen Siedepunkt größer als 300°C haben, zur Schmelzestabilisierung von durch elektrophile Polykondensation hergestellten Polyarylenetherketonen, wobei Polyarylenetherketon-Formmassen, enthaltend
A) 50 bis 99,99 Gew.-% eines durch elektrophile Polykondensation hergestellten Polyaryletherketons, das zu mindestens 50 mol-% aus Einheiten der allgemeinen Formel I' 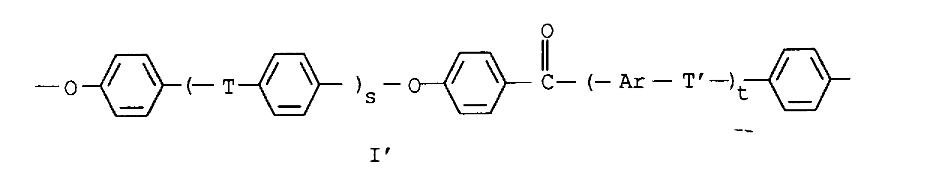 oder deren kernsubstituierten C₁- bis C₈-Alkyl-, C₆- bis C₂₀-Aryl- oder Halogenderivaten besteht, wobei s, t jeweils den Wert 0, 1, 2 oder 3 annehmen können, T, T', -O-oder -CO- bedeuten und Ar für meta-Phenylen, para-Phenylen oder zwei aromatische Ringe, die in meta- oder para-Stellung durch eine chemische Bindung miteinander verknüpft sind, steht,
B) 0,01 bis 4 Gew.-% mindestens einer organischen Verbindung, die eine Basenkonstante pK_{b} zwischen 2 und 12 aufweist und einen Siedepunkt größer als 300°C hat,
C) 0 bis 30 Gew.-% eines weiteren, von A) verschiedenen Thermoplasten,
D) 0 bis 45 Gew.-% faser- oder teilchenförmige Füllstoffe oder deren Mischungen
erhalten werden.

8. Verwendung nach Anspruch 8, wobei die Komponente B) 2,3-Bipyridin, 4-Benzoylpyridin, 2,6-Diphenylpyridin, 2,6-Bis(benzoylphenyl)pyridin, 2,6-Bis(4-benzoylphenoxy)pyridin, 2,2',6,2"-Terpyridin, Phenazin, 3,4-Benzochinolin, 7,8-Benzochinolin, 2-Phenylchinolin, 2-Phenylindol, 1-Methyl-2-phenylindol, 1,2-Diphenylindol, 9-Phenylcarbazol, Dibenzothiophen oder Thioxanthon oder deren Mischungen ist.

9. Verwendung nach Anspruch 8 oder 9, wobei als Komponente A) ein Polyaryletherketon aus den Einheiten Ie 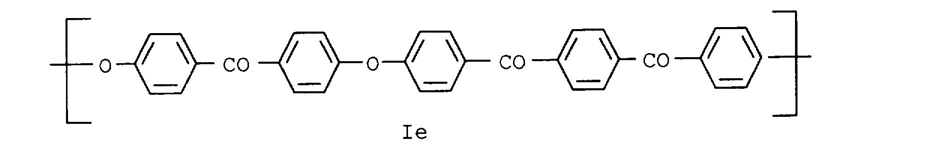 eingesetzt wird.

## Claims

1. A stabilized polyaryl ether ketone molding composition containing
A) from 50 to 99.99 % by weight of a polyaryl ether ketone prepared by electrophilic polycondensation and composed to an extent of not less than 50 mol% of units of the formula I' 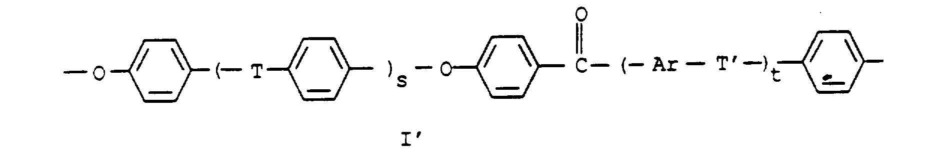 where s and t are each 0, 1, 2 or 3, T and T' are each -O- or -CO- and Ar is meta-phenylene, paraphenylene or two aromatic rings linked to each other in the meta or para position by a chemical bond, or the ring-substituted C₁-C₈-alkyl, C₆-C₂₀-aryl or halogen derivatives thereof,
B) from 0.01 to 4 % by weight of at least one organic compound which has a base constant pK_{b} within the range from 2 to 12 and a boiling point of higher than 300°C,
C) from 0 to 30 % by weight of a further thermoplastic other than A),
D) from 0 to 45 % by weight of fibrous or particulate fillers or mixtures thereof.

2. A stabilized polyaryl ether ketone molding composition as claimed in claim 1, wherein a polyaryl ether ketone composed of the units I 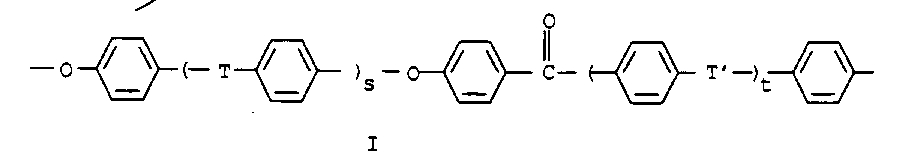 is used as component A).

3. A stabilized polyaryl ether ketone molding composition as claimed in claim 1 or 2, containing component B) in an amount of from 0.1 to 1 % by weight.

4. A stabilized polyaryl ether ketone molding composition as claimed in any of claims 1 to 3, wherein component B) is selected from the group consisting of 2,3-bipyridine, 4-benzoylpyridine, 2,6-diphenylpyridine, 2,6-bis(benzoylphenyl)pyridine, 2,6-bis(4-benzoylphenoxy)pyridine, 2,2',6,2"-terpyridine, phenazine, 3,4benzoquinoline, 7,8-benzoquinoline, 2-phenylquinoline, 2-phenylindole, 1-methyl-2-phenylindole, 1,2-diphenylindole, 9-phenylcarbazole, dibenzothiophene, thioxanthone and mixtures thereof.

5. A stabilized polyaryl ether ketone molding composition as claimed in any of claims 1 to 4, wherein a polyaryl ether ketone composed of the units Ie 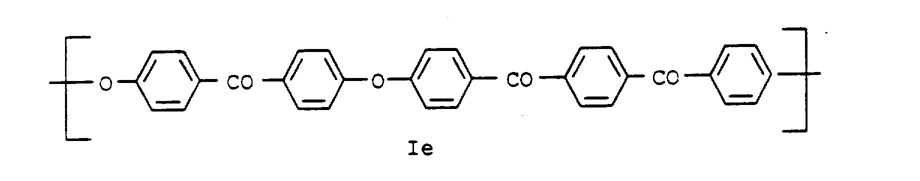 is used as component A).

6. The use of stabilized polyaryl ether ketone molding compositions as claimed in claims 1 to 5 for manufacturing fibers, films and molded articles.

7. The use of organic compounds which have a base constant pK_{b} between 2 and 12 and a boiling point greater than 300°C, for melt stabilization of polyaryl ether ketones prepared by electrophilic polycondensation, to obtain polyaryl ether ketone molding compositions containing
A) from 50 to 99.99 % by weight of a polyaryl ether ketone prepared by electrophilic polycondensation and composed to an extent of not less than 50 mol% of units of the formula I' 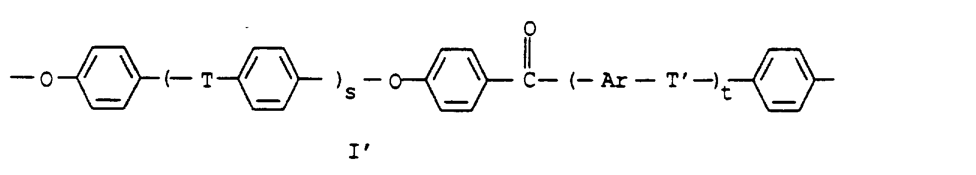 where s and t are each 0, 1, 2 or 3, T and T' are each -O- or -CO- and Ar is meta-phenylene, para-phenylene or two aromatic rings linked to each other in the meta or para position by a chemical bond, or the ring-substituted C₁-C₈-alkyl, C₆-C₂₀-aryl or halogen derivatives thereof,
B) from 0.01 to 4 % by weight of at least one organic compound which has a base constant pK_{b} within the range from 2 to 12 and a boiling point of higher than 300°C,
C) from 0 to 30 % by weight of a further thermoplastic other than A),
D) from 0 to 45 % by weight of fibrous or particulate fillers or mixtures thereof.

8. A use as claimed in claim 8, wherefor component B) is 2,3-bipyridine, 4-benzoylpyridine, 2,6-diphenylpyridine, 2,6-bis(benzoylphenyl)pyridine, 2,6-bis(4-benzoylphenoxy)pyridine, 2,2' ,6,2"-terpyridine, phenazine, 3,4-benzoquinoline, 7,8-benzoquinoline, 2-phenylquinoline, 2-phenylindole, 1-methyl-2-phenylindole, 1,2-diphenylindole, 9-phenylcarbazole, dibenzothiophene or thioxanthone or mixtures thereof.

9. A use as claimed in claim 8 or 9, wherefor a polyaryl ether ketone composed of the units Ie 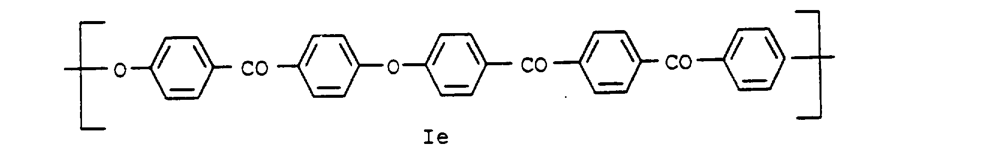 is used as component A).

## Revendications

1. Masses à mouler de poly(aryléthercétones) stabilisées, contenant
A) 50 à 99,99% en poids d'une poly(aryléthercétone) qui a été préparée par polycondensation électrophile et qui se compose, pour 50% en moles au moins, de motifs de formule générale I' 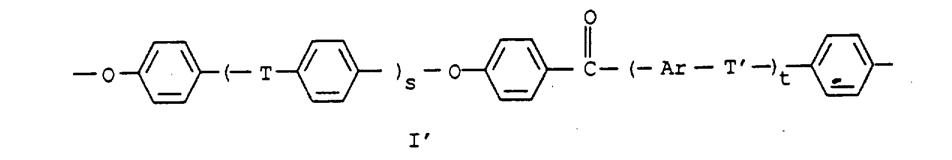 ou de leurs dérivés substitués sur le noyau par des restes alkyle en C₁-C₈, aryle en C₆-C₂₀ ou par des atomes d'halogène, s et t pouvant prendre chacun la valeur 0, 1, 2 ou 3, T et T' représentant -O- ou -CO- et Ar étant mis pour un radical méta-phényléne, para-phénylène ou pour deux noyaux aromatiques qui sont reliés entre eux en position méta ou para par une liaison chimique,
B) 0,01 à 4% en poids d'au moins un composé organique qui présente une constante de bases pK_{b} comprise entre 2 et 12 et a un point d'ébullition supérieur à 300°C,
C) 0 à 30% en poids d'une autre matière thermoplastique, différente de A),
D) O & 45% en poids de charges fibreuses ou particulaires ou de mélanges de celles-ci.

2. Masses à mouler de poly(aryléthercétones) stabilisées selon la revendication 1, caractérisées en ce que l'on utilise, comme composant A), une poly(aryléthercétone) composée des motifs I

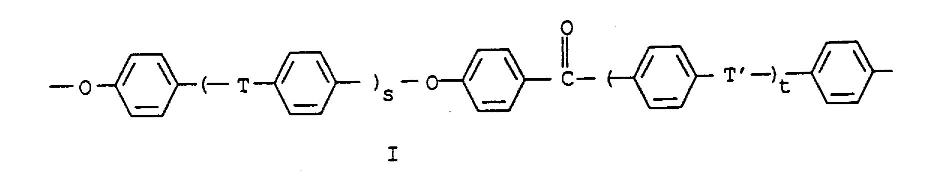

3. Masses à mouler de poly(aryléthercétones) stabilisées selon la revendication 1 ou 2, caractérisées en ce qu'elles contiennent le composant B) dans une proportion de 0,1 & 1% en poids.

4. Masses à mouler de poly(aryléthercétones) stabilisées selon l'une quelconque des revendications 1 à 3, caractérisées en ce que le composant B) est choisi dans le groupe constitué de la 2,3-bipyridine, de la 4-benzoylpyridine, de la 2,6-diphénylpyridine, de la 2,6-bis(benzoylphényl)pyridine, de la 2,6-bis(4-benzoylphénoxy)pyridine, de la 2,2',6,2"-terpyridine, de la phénazine, de la 3,4-benzoquinoléine, de la 7,8-benzoquinoléine, de la 2-phénylquinoléine, du 2-phénylindole, du 1-méthyl-2-phénylindole, du 1,2-diphénylindole, du 9-phénylcarbazole, du dibenzothiophéne, de la thioxanthone ou de mélanges de ceux-ci.

5. Masses à mouler de poly(aryléthercétones) stabilisées selon l'une quelconque des revendications 1 à 4, caractérisées caractérisées en ce que l'on utilise, comme composant A), une polkycaryléthercétone) composée des motifs Ie

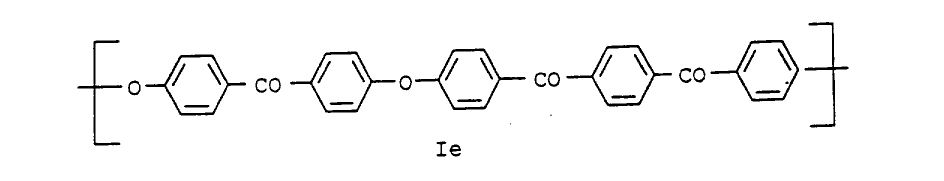

6. Utilisation de masses à mouler de poly(aryléthercétones) stabilisées selon l'une quelconque des revendications 1 à 5 pour la fabrication de fibres, de feuilles et de corps moulés.

7. Utilisation de composés organiques, qui présentent une constante de bases pK_{b} comprise entre 2 et 12 et ont un point d'ébullition supérieur à 300°C, pour la stabilisation A l'état fondu de poly(aryléthercétones) préparées par polycondensation électrophile, de sorte que l'on obtienne des masses à mouler de poly(aryléthercétones) contenant
A) 50 à 99,99% en poids d'une poly(aryléthercétone) qui a été préparée par polycondensation électrophile et qui se compose, pour 50% en moles au moins, de motifs de formule générale I' 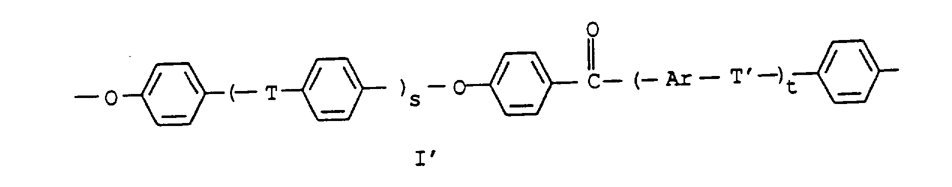 ou de leurs dérivés substitués sur le noyau par des restes alkyle en C₁-C₈, aryle en C₆-C₂₀ ou par des atomes d'halogène, s et t pouvant prendre chacun la valeur 0, 1, 2 ou 3, T et T' représentant -O- ou -CO- et Ar étant mis pour un radical méta-phénylène, paraphénylène ou pour deux noyaux aromatiques qui sont reliés entre eux en position méta ou para par une liaison chimique,
B) 0,01 à 4% en poids d'au moins un composé organique qui présente une constante de bases pK_{b} comprise entre 2 et 12 et a un point d'ébullition supérieur à 300°C,
C) 0 à 30% en poids d'une autre matière thermoplastique, différente de A),
D) 0 à 45% en poids de charges fibreuses ou particulaires ou de mélanges de celles-ci.

8. Utilisation selon la revendication 8, le composant B) étant la 2,3-bipyridine, la 4-benzoylpyridine, la 2,6-diphénylpyridine, la 2,6-bis(benzoylphényl)pyridine, 1a 2,6-bis(4-benzoylphénoxy)pyridine, la 2,2',6,2"-terpyridine, la phénazine, la 3,4-benzoquinoléine, la 7,8-benzoquinoléine, la 2-phénylquinoléine, le 2-phénylindole, le 1-méthyl-2-phénylindole, le 1,2-diphénylindole, le 9-phénylcarbazole, le dibenzothiophéne, la thioxanthone ou des mélanges de ceux-ci.

9. Utilisation selon la revendication 8 ou 9, le composant A) utilisé étant une poly(aryléthercétone) composée des motifs Ie
